# EUROPEAN PATENT APPLICATION

(11) **EP 4 708 830 A1**
(43) Date of publication of application: **11.03.2026**
(21) Application number: 24838309.3
(22) Date of filing: 01.03.2024
(51) Int. Cl.: H04M 1/02

(54) **HINGE COVER, FOLDING-SCREEN TERMINAL, AND MANUFACTURING METHOD FOR HINGE COVER**

(30) Priority: 10.07.2023 CN 202310841139
(71) Applicant: Honor Device Co., Ltd., Shenzhen, Guangdong 518040 (CN)
(72) Inventor: BAN, Ziyou, Shenzhen, Guangdong 518040 (CN); GAO, Mingqian, Shenzhen, Guangdong 518040 (CN); WEI, Yameng, Shenzhen, Guangdong 518040 (CN); YUAN, Leibo, Shenzhen, Guangdong 518040 (CN); LIU, Kun, Shenzhen, Guangdong 518040 (CN)
(74) Representative: Isarpatent
(86) International application number: PCT/CN2024/079631
(87) International publication number: WO 2025/011048

(57) **Abstract**

This application provides a hinge cover, a foldable-screen terminal, and a method for manufacturing a hinge cover, and relates to the field of foldable-screen terminal technologies, to resolve a problem that when a hinge cover is lightweight, an imprint is prone to be formed on an outer surface, affecting overall aesthetics. The hinge cover includes a hinge cover body and a threaded column. The hinge cover body has an inner surface. The threaded column is disposed on the inner surface of the hinge cover body, and the threaded column is configured to be connected to a structural member of a foldable-screen terminal. Material yield strength of the hinge cover is greater than 300 MPa. The hinge cover provided in this application is applied to the foldable-screen terminal.

## Description

This application claims priority to Chinese Patent Application No. 202310841139.8, filed with the China National Intellectual Property Administration on July 10, 2023 and entitled "HINGE COVER, FOLDABLE-SCREEN TERMINAL, AND METHOD FOR MANUFACTURING HINGE COVER", which is incorporated herein by reference in its entirety.

### TECHNICAL FIELD

This application relates to the field of foldable-screen terminal technologies, and in particular, to a hinge cover, a foldable-screen terminal, and a method for manufacturing a hinge cover.

### BACKGROUND

A foldable-screen terminal can implement large-screen display (when the fordable-screen terminal is in an unfolded state), and therefore is favored by a consumer. An internal structure of the foldable-screen terminal is shielded by using a hinge cover, thereby facilitating overall aesthetics. However, when the hinge cover is manufactured lightweight, an imprint is prone to be formed on the hinge cover due to the internal structure of the foldable-screen terminal. Therefore, the overall aesthetics is affected, and user experience is degraded.

### SUMMARY

Embodiments of this application provide a hinge cover, a foldable-screen terminal, and a method for manufacturing a hinge cover, to resolve a problem that when a hinge cover is lightweight, an imprint is formed on the hinge cover due to an internal structure of a foldable-screen terminal, affecting overall aesthetics and degrading user experience.

To achieve the foregoing objective, the following technical solutions are used in the embodiments of this application.

According to a first aspect, a hinge cover is provided. The hinge cover includes a hinge cover body and a threaded column. The hinge cover body has an inner surface. The threaded column is disposed on the inner surface of the hinge cover body, and the threaded column is configured to be connected to a structural member of a foldable-screen terminal. Material yield strength of the hinge cover is greater than 300 MPa.

According to the hinge cover provided in the first aspect of this application, the hinge cover is made of a material whose yield strength is greater than 300 MPa, to improve overall hardness of the hinge cover. Therefore, when a threaded connection is implemented between the hinge cover and the structural member of the foldable-screen terminal through the threaded column, a greater force can be borne. This can lower a risk that an imprint occurs on an outer surface of the hinge cover, to improve overall aesthetics, and help improve user experience.

In a possible implementation of the first aspect of this application, a thickness of the hinge cover body is less than 0.8 mm. Because material strength of the hinge cover is enhanced, a thickness dimension of the hinge cover may be reduced, and the hinge cover can still meet a strength requirement of an overall structure. In addition, a reduction in the thickness dimension of the hinge cover helps reduce a weight, thereby facilitating lightweight design of a device.

In a possible implementation of the first aspect of this application, the hinge cover is made of a titanium alloy material or a high-strength steel material.

In a possible implementation of the first aspect of this application, the threaded column is integrally formed with the hinge cover body. This structure helps further improve reliability of the overall structure of the hinge cover.

In a possible implementation of the first aspect of this application, the threaded column includes a first column body, and an external thread is disposed on an outer sidewall of the first column body. In this structure, a second column body may pass through a through hole on the structural member, and be secured through a nut, to implement a fixed connection between the structural member and the hinge cover.

In a possible implementation of the first aspect of this application, the threaded column includes a second column body, a threaded hole is disposed on an end face that is of the second column body and that is away from the inner surface, and an internal thread is disposed in the threaded hole. In this structure, a stud disposed on the structural member may be inserted into the threaded hole on the second column body, to implement a fixed connection between the structural member and the second column body.

In a possible implementation of the first aspect of this application, two connection grooves are disposed on the hinge cover body, and the two connection grooves are respectively disposed at two ends of the hinge cover body in a length direction. In this structure, shielding plates may be disposed in the connection grooves. Through the two shielding plates, exposure of an internal structure of the device from two ends of the hinge cover in a length direction can be avoided, to help further improve overall aesthetics.

In a possible implementation of the first aspect of this application, a limiting groove is disposed on a sidewall of the connection groove. In this structure, further limiting may be formed between the shielding plate and the hinge cover body, that is, a limiting protrusion is disposed on the shielding plate, and is inserted into the limiting groove, to restrict the shielding plate from disengaging from the connection groove, so as to help improve connection reliability between the shielding plate and the hinge cover.

In a possible implementation of the first aspect of this application, the limiting groove is disposed on a sidewall that is of the connection groove and that is distributed in the length direction of the hinge cover body, and both the connection groove and the limiting groove extend in a width direction of the hinge cover body. This structure helps increase a contact area between the shielding plate and the hinge cover body, that is, increase a force-bearing area between the shielding plate and the hinge cover body, to help further improve connection reliability between the shielding plate and the hinge cover body.

In a possible implementation of the first aspect of this application, the hinge cover further includes at least one positioning column, and the positioning column is disposed on the inner surface of the hinge cover body. In this way, pre-positioning with the structural member can be implemented through the positioning column, to avoid relative movement between the hinge cover and the structural member. This helps reduce assembly difficulty and improve working efficiency.

In a possible implementation of the first aspect of this application, a cross section of the positioning column is a circle, an ellipse, or a regular polygon.

In a possible implementation of the first aspect of this application, a boss is formed on the inner surface, and the threaded column is disposed on the boss. This structure helps increase a thickness of the threaded column, that is, can increase a thickness of a region that is on the hinge cover body and that corresponds to the threaded column, to help further improve strength of the region, so that the region can bear a greater extrusion pressure, to further lower a risk that an imprint occurs on an outer surface of the hinge cover body.

In a possible implementation of the first aspect of this application, a plurality of cavities are disposed inside the hinge cover body, and the plurality of cavities are distributed at intervals. This structure helps reduce a weight of the hinge cover body, thereby facilitating lightweight design of the device. In addition, the plurality of cavities are disposed, to help improve a heat dissipation effect of the hinge cover.

In a possible implementation of the first aspect of this application, vertical projections of the plurality of cavities on the inner surface are disposed offset from a vertical projection of the threaded column on the inner surface. In this structure, a reduction, in a thickness dimension of the region that is on the hinge cover body and that corresponds to the threaded column, caused due to the cavity can be avoided, to help ensure overall strength of the hinge cover.

In a possible implementation of the first aspect of this application, at least one groove body is disposed on the inner surface. In this structure, the groove body is disposed, to help reduce a weight of the hinge cover, and help reduce processing difficulty.

In a possible implementation of the first aspect of this application, a region occupied by the groove body on the inner surface is disposed offset from the vertical projection of the threaded column on the inner surface. In this structure, a reduction in a thickness dimension of the region that is on the hinge cover body and that corresponds to the threaded column can be avoided, to help ensure overall strength of the hinge cover.

According to a second aspect, a foldable-screen terminal is provided, including a foldable screen, a first housing, a second housing, and a rotation mechanism. The rotation mechanism includes a hinge assembly and a hinge cover. The foldable screen is supported on the first housing, the second housing, and the hinge assembly. The first housing and the second housing are respectively fastened to two sides of the hinge assembly. The hinge cover is the hinge cover described in any one of the foregoing technical solutions, and the hinge assembly is disposed on an inner surface of a hinge cover body of the hinge cover.

The foldable-screen terminal provided in the second aspect of this application includes the hinge cover described in any one of the foregoing technical solutions. Therefore, a same technical problem can be resolved, and same technical effects can be obtained.

According to a third aspect, a method for manufacturing a hinge cover is provided. The method includes: first, manufacturing a hinge cover blank, where the hinge cover blank includes a hinge cover body blank and a threaded column blank, and material yield strength of the hinge cover blank is greater than 300 MPa; and then, finishing the hinge cover blank to form a hinge cover.

According to the manufacturing method provided in the third aspect of this application, the hinge cover blank is first manufactured by using a material whose yield strength is greater than 300 MPa, and the hinge cover blank forms only a basic outline of the hinge cover. Then, the hinge cover blank is finished to form the hinge cover. In this way, the hinge cover blank can be manufactured by using some process methods with low processing accuracy and relatively low costs, to help lower production costs.

In a possible implementation of the third aspect of this application, the finishing the hinge cover blank includes: tapping the threaded column blank, to form a threaded column.

In a possible implementation of the third aspect of this application, the finishing the hinge cover blank further includes: cutting and polishing the hinge cover blank. In this way, precise dimension processing and polishing can be performed on the hinge cover blank, to form a hinge cover with an exquisite appearance.

In a possible implementation of the third aspect of this application, at least one of a cavity, a boss, and a groove body is disposed on the hinge cover body blank. In this way, in a 3D printing process, these weight reduction structures can be formed, to help further improve production efficiency.

In a possible implementation of the third aspect of this application, a method for manufacturing the hinge cover blank includes the 3D printing process. Because the hinge cover uses a material with relatively high strength, use of a conventional computer numerical control machine cutting process results in relatively long processing duration and relatively high processing difficulty. Therefore, use of the 3D printing process helps reduce processing duration and lower production costs.

In a possible implementation of the third aspect of this application, a method for finishing the hinge cover blank includes a numerical control machine tool cutting process. The hinge cover blank is finished by using only the numerical control machine tool process, to greatly reduce working hours and help lower costs.

### BRIEF DESCRIPTION OF DRAWINGS

FIG. 1 is a diagram of a structure of a foldable-screen terminal according to an embodiment of this application;
FIG. 2 is a main view of a foldable-screen terminal according to an embodiment of this application;
FIG. 3 is a main view of a foldable-screen terminal in a folded state according to an embodiment of this application;
FIG. 4 is a main view of another foldable-screen terminal according to an embodiment of this application;
FIG. 5 is a diagram of a partial structure between a hinge cover and a structural member according to a related technology;
FIG. 6 is a diagram of a structure of a hinge cover according to an embodiment of this application;
FIG. 7 is an enlarged view of a structure of a region A of the hinge cover provided in FIG. 6;
FIG. 8 is a diagram of a partial connection structure between the hinge cover provided in FIG. 6 and a structural member;
FIG. 9 is a diagram of a structure of a threaded column according to an embodiment of this application;
FIG. 10 is a diagram of a structure of another threaded column according to an embodiment of this application;
FIG. 11 is a diagram of a structure of still another threaded column according to an embodiment of this application;
FIG. 12 is a diagram of a connection structure between a positioning column and a structural member according to an embodiment of this application;
FIG. 13 is a diagram of a structure of another connection groove according to an embodiment of this application;
FIG. 14 is a diagram of a cross-sectional structure of another hinge cover according to an embodiment of this application;
FIG. 15 is a diagram of a cross-sectional structure of still another hinge cover according to an embodiment of this application;
FIG. 16 is a diagram of a structure of a hinge cover blank according to an embodiment of this application; and
FIG. 17 is an enlarged view of a region B of the hinge cover blank provide in FIG. 16.

Reference numerals: 01: foldable-screen terminal; 10: foldable screen; 11: first part; 12: second part; 13: third part; 20: support apparatus; 21: first housing; 22: second housing; 23: rotation mechanism; 100: hinge cover; 100a: hinge cover blank; 101: stud; 110: hinge cover body; 110a: hinge cover body blank; 111: boss; 112: cavity; 113: groove body; 121: threaded column; 121a: first column body; 121b: second column body; 121c: threaded hole; 121d: threaded column blank; 122: positioning column; 122a: positioning hole; 122b: positioning column blank; 123: connection groove; 124: limiting groove; 200: structural member; 210: nut; 300: shielding plate; 310: limiting protrusion; and 40: secondary screen.

### DESCRIPTION OF EMBODIMENTS

The following describes technical solutions in embodiments of this application with reference to the accompanying drawings in the embodiments of this application. Clearly, the described embodiments are merely some but not all of the embodiments of this application.

The terms "first", "second", and the like below are merely used for a purpose of description, and shall not be understood as an indication or implication of relative importance or implicit indication of a quantity of indicated technical features. Therefore, a feature defined by "first", "second", and the like may explicitly or implicitly include one or more such features.

In addition, in this application, orientation terms such as "upper" and "lower" are defined relative to the orientations in which components in the accompanying drawings are schematically placed. It should be understood that these orientation terms are relative concepts, are used for relative description and clarification, and may be correspondingly changed based on changes in the orientations in which the components are placed in the accompanying drawings.

In this application, unless otherwise specified and defined, the term "connection" should be understood in a broad sense. For example, a "connection" may be a fixed connection, may be a detachable connection, or may be integration, and may be a direct connection or an indirect connection implemented through an intermediate medium.

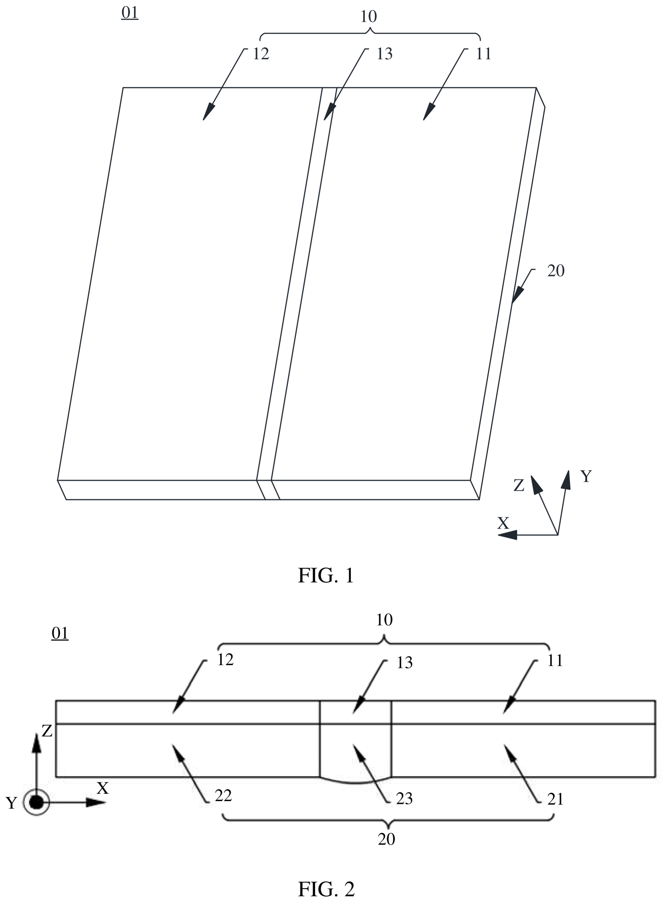

This application provides a foldable-screen terminal. The foldable-screen terminal may be a type of electronic device with a foldable screen. In the embodiments of this application, an example in which the foldable-screen terminal is a mobile phone is used for description. Specifically, refer to FIG. 1 and FIG. 2. FIG. 1 is a diagram of a structure of a foldable-screen terminal 01 according to an embodiment of this application, and FIG. 2 is a main view of a foldable-screen terminal 01 according to an embodiment of this application. The foldable-screen terminal 01 may include a foldable screen 10 and a support apparatus 20.

For ease of description in the following, an XYZ coordinate system is established. A width direction of the foldable-screen terminal 01 is defined as an X-axis direction, a length direction of the foldable-screen terminal 01 is defined as a Y-axis direction, and a thickness direction of the foldable-screen terminal 01 is defined as a Z-axis direction. It may be understood that the XYZ coordinate system may be flexibly transformed based on an actual requirement. Only a possible example is provided in this embodiment of this application. In addition, FIG. 1 only shows an example of some components of the foldable-screen terminal 01. Actual shapes, actual sizes, actual positions, and actual constructions of these components are not limited by FIG. 1.

The foldable screen 10 is configured to display an image, a video, and the like. The foldable screen 10 may include a first part 11, a second part 12, and a third part 13. The third part 13 is disposed between the first part 11 and the second part 12. When the foldable screen 10 is folded, the third part 13 is bent, and the first part 11 and the second part 12 are disposed opposite to each other. At least the third part 13 of the foldable screen 10 is made of a flexible material. The first part 11 and the second part 12 of the foldable screen 10 may be made of a flexible material, or may be made of a rigid material, or may be partially made of a flexible material and partially made of a rigid material. This is not specifically limited in this application.

For example, the foldable screen 10 may be an organic light-emitting diode (organic light-eitting diode, OLED) display, an active-matrix organic light-emitting diode or an active-matrix organic light-emitting diode (active-atrix organic light-eitting diode, AOLED) display, a mini light-emitting diode (ini organic light-eitting diode) display, a micro light-emitting diode (icro light-eitting diode) display, a micro organic light-emitting diode (icro organic light-eitting diode) display, a quantum dot light emitting diode (quantu dot light eitting diode, QLED) display, or a liquid crystal display (liquid crystal display, LCD), and the like.

The support apparatus 20 is configured to support the foldable screen 10. The support apparatus 20 may include a first housing 21, a second housing 22, and a rotation mechanism 23. The rotation mechanism 23 is connected between the first housing 21 and the second housing 22. The first part 11 of the foldable screen 10 is supported on and attached to the first housing 21. The second part 12 of the foldable screen 10 is supported on and attached to the second housing 22. The third part 13 of the foldable screen 10 is supported on and attached to the rotation mechanism 23. The first housing 21 and the second housing 22 are rotatably connected through the rotation mechanism 23, so that the foldable-screen terminal 01 can rotate between an unfolded state and a folded state.

Still refer to FIG. 1 and FIG. 2. FIG. 1 and FIG. 2 are schematic diagrams of a structure of a foldable-screen terminal 01 in an unfolded state. When the foldable-screen terminal 01 is in the unfolded state, surfaces that are of the first housing 21, the second housing 22, and the rotation mechanism 23 of the support apparatus 20 and that face the foldable screen 10 are located on a same plane, to completely unfold the foldable screen 10, and ensure flatness of the foldable screen 10. In this state, large-screen display can be implemented, and better user experience may be brought.

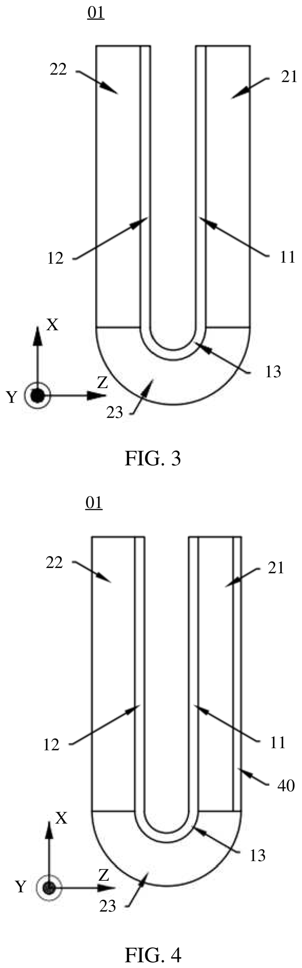

Refer to FIG. 3. FIG. 3 is a main view of a foldable-screen terminal 01 in a folded state according to an embodiment of this application. When the foldable-screen terminal 01 is in the folded state, the first part 11 and the second part 12 are opposite to each other, the third part 13 is in a bent state, the support apparatus is located outside the foldable screen 10 for protection, and the foldable screen 10 is invisible to a user, to prevent the foldable screen 10 from being scratched or damaged, so as to effectively protect the foldable screen 10.

In some embodiments, refer to FIG. 4. FIG. 4 is a main view of another foldable-screen terminal 01 according to an embodiment of this application. The foldable-screen terminal 01 may further include a secondary screen 40 (which may also be referred to as an outer screen). The secondary screen 40 is a flat screen, and is disposed on a side that is of the first housing 21 and that is away from the foldable screen 10, or is disposed on a side that is of the second housing 22 and that is away from the foldable screen 10. When the foldable-screen terminal 01 is in the folded state, the secondary screen 40 may be used to display an image, to implement a one-hand operation on the device.

The rotation mechanism 23 may include a hinge assembly (not shown in the figure) and a hinge cover 100. The hinge assembly is configured to be separately connected to the first housing 21 and the second housing 22 shown in FIG. 1 to FIG. 4, so that the first housing 21 and the second housing 22 can rotate relative to each other. The hinge assembly is disposed on an inner side of the hinge cover 100, that is, the hinge cover 100 forms an appearance part. When the foldable-screen terminal 01 is in the folded state, the hinge cover 100 is exposed to avoid exposure of the hinge assembly, thereby facilitating overall aesthetics.

The hinge cover 100 and the hinge assembly need to be fixedly connected to improve reliability of an overall structure. It should be noted that the fixed connection between the hinge cover 100 and the hinge assembly is a fixed connection between the hinge cover 100 and some structural members 200 (for example, a middle beam of the hinge assembly, where two sides of the middle beam are respectively and rotatably connected to the first housing 21 and the second housing 22 through swing arms) included in the hinge assembly, so that a movable component in the hinge assembly can drive the first housing 21 and the second housing 22 to rotate relative to the hinge cover 100. Therefore, a specific structure of the hinge assembly is not specifically limited in this application. The following uses the structural member 200 as an example for description.

To meet a requirement for a thin and light device, a thickness dimension of the hinge cover 100 is relatively small. In addition, the hinge cover 100 may be made of an aluminum alloy material. The aluminum alloy material has advantages of low density, a light weight, strong corrosion resistance, good mechanical performance, and the like. Therefore, the hinge cover 100 made of aluminum alloy facilitates overall lightening and thinning of the device.

However, the aluminum alloy material is relatively light, and has yield strength of 100-300 MPa and density of 2.7 g/cm³, and when the thickness dimension of the hinge cover 100 is relatively small, overall structural strength of the hinge cover 100 is relatively low. Therefore, when the hinge cover 100 and the structural member 200 are fixedly connected, an imprint is prone to be formed on an outer surface of the hinge cover 100.

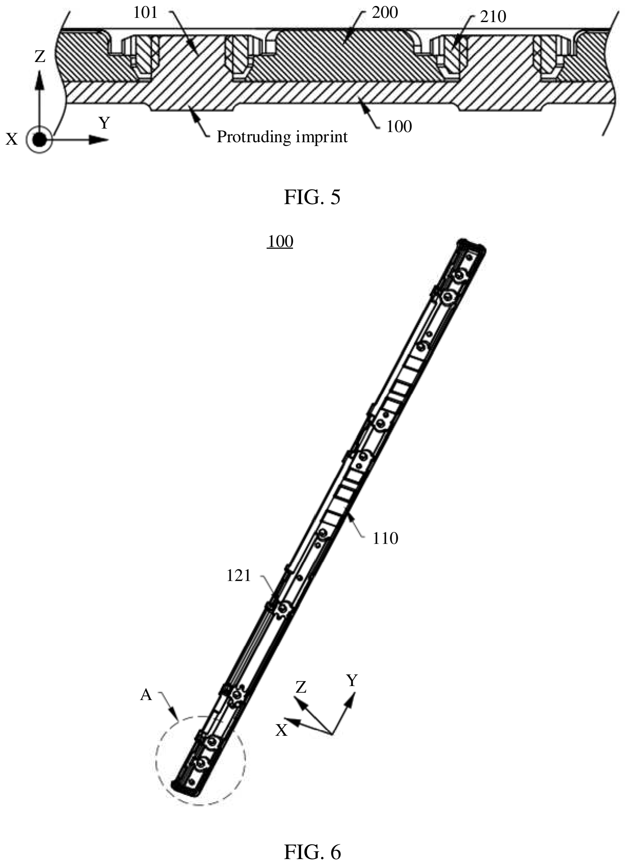

For example, refer to FIG. 5. FIG. 5 is a diagram of a partial structure between a hinge cover 100 and a structural member 200 according to a related technology. A stud 101 is disposed on the hinge cover 100, a through hole is disposed on the structural member 200, and the stud 101 is inserted into the through hole and secured through a nut 210, to implement a threaded connection. When the nut 210 and the stud 101 are fastened to each other, the nut 210 and the stud 101 on the hinge cover 100 exert forces on each other. In this case, the nut 210 exerts a force on the structural member 200 and an inner surface of the hinge cover 100. Therefore, a region that is on the hinge cover 100 and that corresponds to the stud 101 is prone to be deformed in a direction away from the structural member 200, that is, a protruding imprint is formed on the outer surface of the hinge cover 100, affecting flatness of the outer surface of the hinge cover 100 and affecting overall aesthetics.

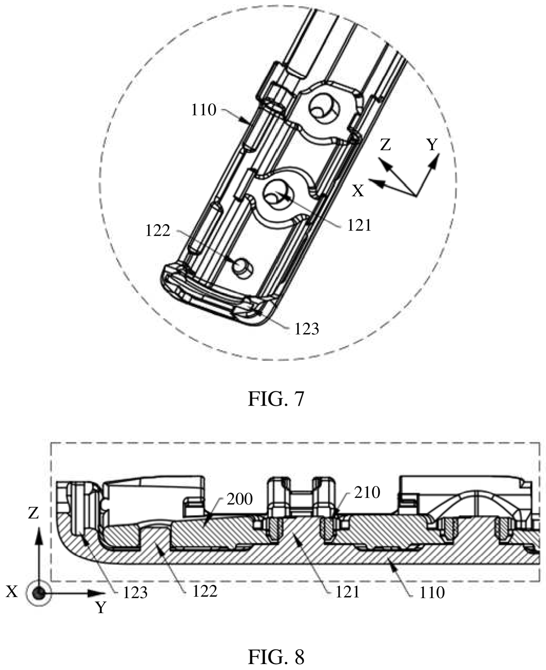

To resolve the foregoing problem, refer to FIG. 6, FIG. 7, and FIG. 8. FIG. 6 is a diagram of a structure of a hinge cover 100 according to an embodiment of this application, FIG. 7 is an enlarged view of a structure of a region A of the hinge cover 100 provided in FIG. 6, and FIG. 8 is a diagram of a partial connection structure between the hinge cover 100 provided in FIG. 6 and a structural member 200. The hinge cover 100 includes a hinge cover body 110 and a threaded column 121, and the hinge cover body 110 has an inner surface. The threaded column 121 is disposed on the inner surface of the hinge cover body 110, and the threaded column 121 is configured to be connected to the foregoing structural member 200. In addition, material yield strength of the hinge cover 100 provided in this embodiment of this application is greater than 300 MPa.

For example, the hinge cover 100 provided in this embodiment of this application may be made of a titanium alloy material. Titanium alloy is alloy formed by adding another element based on a titanium element. Yield strength of the titanium alloy material is 800-1000 MPa, and density is 4.43 g/cm³. The titanium alloy has advantages of high strength, high thermal strength, good corrosion resistance, good low temperature performance, and the like.

Alternatively, the hinge cover 100 provided in this embodiment of this application may be made of a high-strength steel material. Yield strength of the high-strength steel material is 550-680 MPa, and density is 7.85 g/cm³. The high-strength steel material has relatively high material strength.

In this way, the hinge cover 100 provided in this embodiment of this application is made of a material with relatively high yield strength, to improve overall strength of the hinge cover 100. When the hinge cover 100 and the foregoing structural member 200 are connected and subjected to a force, a risk that the structural member 200 causes a partial region of the hinge cover 100 to be deformed can be lowered. This helps lower a risk that a protruding imprint is generated on an outer surface of the hinge cover 100, to improve overall aesthetics, and help improve user experience.

On this basis, a thickness dimension of the hinge cover 100 provided in this embodiment of this application may be less than 0.8 mm. That is, a thickness dimension of the hinge cover body 110 may be less than 0.8 mm. For example, a thickness of the hinge cover body 110 provided in this embodiment of this application may be 0.7 mm, 0.6 mm, 0.5 mm, or the like. A material with relatively high yield strength is used for manufacturing. Therefore, when the thickness of the hinge cover body 110 is relatively small, a strength requirement of the hinge cover 100 can still be met, that is, a probability that the hinge cover 100 is deformed can still be reduced. In addition, a reduction in the thickness dimension of the hinge cover body helps reduce an overall weight of the hinge cover 100, thereby facilitating lightweight design of the hinge cover 100.

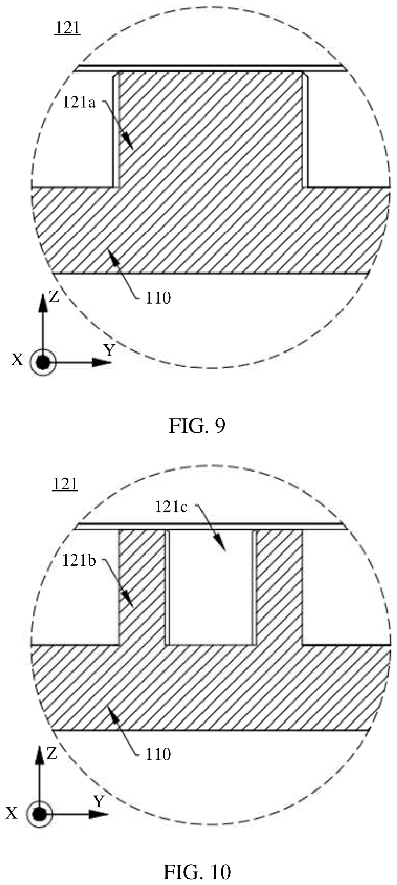

Refer to FIG. 9. FIG. 9 is a diagram of a structure of a threaded column 121 according to an embodiment of this application. The threaded column 121 is configured to implement a threaded fixed connection to the structural member 200 shown in FIG. 5. For example, the threaded column 121 may include a first column body 121a. An external thread is disposed on an outer sidewall of the first column body 121a, so that a threaded connection can be implemented between the first column body 121a and the screw hole disposed on the foregoing structural member 200.

Alternatively, refer to FIG. 10. FIG. 10 is a diagram of a structure of another threaded column 121 according to an embodiment of this application. The threaded column 121 may include a second column body 121b. A threaded hole 121c is disposed on an end face that is of the second column body 121b and that is away from the hinge cover body 110, and an internal thread is disposed in the threaded hole 121c. Correspondingly, a column body structure (not shown in the figure) with an external thread may be disposed on the foregoing structural member 200, so that a threaded connection can be implemented between the second column body 121b and the column body structure disposed on the structural member 200.

Based on this, because the hinge cover 100 provided in this embodiment of this application is made of the titanium alloy material, overall strength of the hinge cover 100 is improved. When the structural member 200 abuts against the inner surface of the hinge cover body 110, the hinge cover body 110 can bear a greater force. Therefore, a risk that an imprint occurs on the outer surface of the hinge cover 100 can be lowered, to improve overall aesthetics.

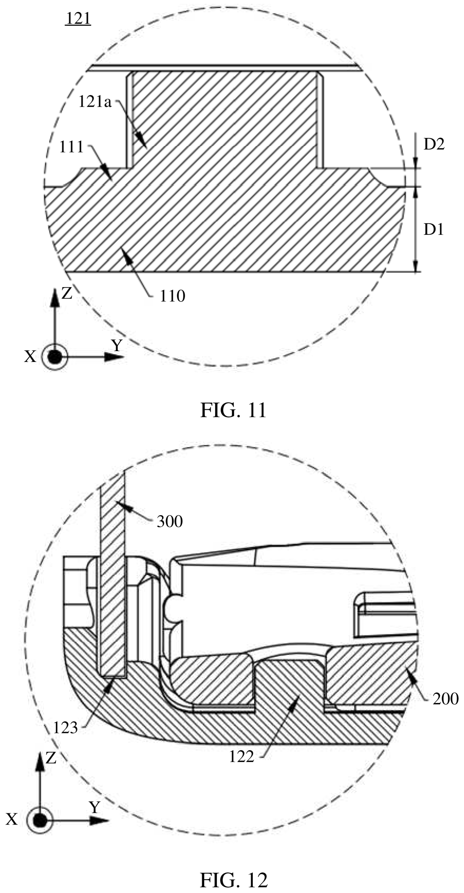

To further improve the force-bearing strength at the connection point between the hinge cover 100 and the structural member 200, referring to FIG. 11, FIG. 11 is a diagram of a structure of still another threaded column 121 according to an embodiment of this application. The hinge cover 100 provided in this embodiment of this application further includes a boss 111. The boss 111 is disposed on the inner surface of the hinge cover body 110, and the threaded column 121 is disposed on the boss 111. In this way, a thickness dimension, namely, a thickness D1 of the hinge cover body 110 plus a thickness D2 of the boss 111, of a region that is on the hinge cover body 110 and that corresponds to a threaded connection point can be increased. This can further improve a force that can be borne by the hinge cover body 110, to further lower a risk that an imprint occurs on the outer surface of the hinge cover 100.

In some other embodiments, refer to FIG. 12. FIG. 12 is a diagram of a connection structure between a positioning column 122 and a structural member 200 according to an embodiment of this application. The hinge cover 100 further includes a positioning column 122, and the positioning column 122 is disposed on the inner surface of the hinge cover body 110. The positioning column 122 is configured to be inserted into and fit with an insertion hole on the structural member 200, thereby implementing pre-positioning in a production and mounting process to improve mounting accuracy and help reduce mounting difficulty.

For example, the positioning column 122 may be of a cylindrical structure, that is, a cross section of the positioning column 122 is a circle. Alternatively, a cross section of the positioning column 122 may be an ellipse, a regular polygon, or the like. Therefore, this is not specifically limited in this application.

Alternatively, a positioning hole 122a may be disposed on an end face that is of the positioning column 122 and that is away from the hinge cover body 110, and a columnar positioning structure on the structural member 200 is inserted into the positioning hole 122a. This can also achieve a pre-positioning effect. Therefore, this is not specifically limited in this application.

In addition, the positioning column 122 may be fastened to the inner surface of the hinge cover body 110 through bonding or welding, or in another manner. Alternatively, the positioning column 122 may be integrally formed with the hinge cover body 110. Therefore, this is not specifically limited in this application.

On this basis, to further lower a risk that the hinge assembly is exposed, so as to improve overall aesthetics, still refer to FIG. 12. Connection grooves 123 are further disposed at two ends of the hinge cover body 110 in a length direction. The foregoing rotation mechanism 23 further includes shielding plates 300 (also referred to as T-shaped blocks or T-shaped plates), and the shielding plates 300 are inserted into the connection grooves 123. The shielding plates 300 are disposed at the two ends of the hinge cover body 110 in the length direction, so that the hinge assembly can be shielded at two ends of the device, to further avoid exposure of an internal structure of the device, so as to further improve the overall aesthetics.

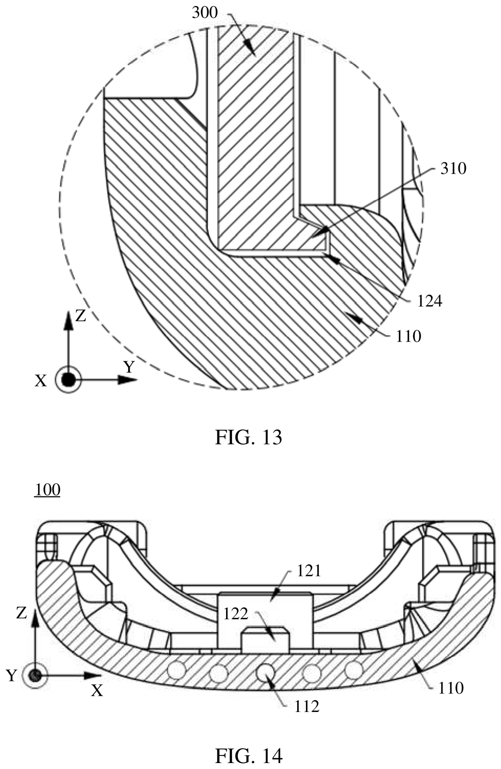

To further improve connection reliability between the shielding plate 300 and the hinge cover body 110, refer to FIG. 13. FIG. 13 is a diagram of a structure of another connection groove 123 according to an embodiment of this application. A limiting groove 124 may be further disposed on a sidewall of the connection groove 123. Correspondingly, a limiting protrusion 310 may be disposed on the shielding plate 300. The limiting protrusion 310 is inserted into the limiting groove 124, to form limiting between the shielding plate 300 and the hinge cover body 110 in a thickness direction of the hinge cover 100, so as to prevent the shielding plate 300 from moving in a direction of disengaging from the connection groove 123. This helps improve reliability of an overall structure.

In some embodiments, still refer to FIG. 12 and FIG. 13. The limiting groove 124 may be disposed on a sidewall that is of the connection groove 123 and that is distributed in the length direction (namely, a Y-axis direction) of the hinge cover body 110, and both the connection groove 123 and the limiting groove 124 extend in a width direction (namely, an X-axis direction) of the hinge cover body 110. In this way, space in the connection groove 123 and in the limiting groove 124 can be increased. Correspondingly, volumes of both a part that is of the shielding plate 300 and that is inserted into the connection groove 123 and the limiting protrusion 310 may be correspondingly increased, that is, a contact area between the shielding plate 300 and a plate body of the hinge cover 100 is increased, to help improve connection and limiting strength between the shielding plate 300 and the hinge cover body 110.

In addition, when the shielding plate 300 is inserted into the connection groove 123 on the hinge cover body 110, the shielding plate 300 and the hinge cover body 110 may be further fixedly connected to each other. For example, the shielding plate 300 and the hinge cover body 110 may be further fastened by using adhesive or a threaded connection, or in another manner, to help further improve connection reliability between the shielding plate 300 and the hinge cover body 110. Therefore, a specific fastening manner between the shielding plate 300 and the hinge cover body 110 is not specifically limited in this application.

On this basis, when the hinge cover 100 is made of a material with relatively high hardness, to further reduce an overall weight of the device, refer to FIG. 14. FIG. 14 is a diagram of a cross-sectional structure of another hinge cover 100 according to an embodiment of this application, and FIG. 14 is a diagram of a cross section perpendicular to a Y-axis direction of the hinge cover 100. A cavity 112 may be disposed inside the hinge cover body 110 provided in this embodiment of this application. In addition, a plurality of cavities 112 are disposed, and the plurality of cavities 112 are distributed at intervals inside the hinge cover body 110.

For example, each cavity 112 may extend in the length direction of the hinge cover body 110, and the plurality of cavities 112 may be distributed at intervals in a plurality of groups in the length direction of the hinge cover body 110. Each group of cavities 112 includes a plurality of cavities, and the plurality of cavities 112 in each group of cavities 112 may be distributed at intervals in the width direction of the hinge cover body 110.

In addition, cross sections of the plurality of cavities 112 may be in a same shape. For example, all the cross sections are circles, as shown in FIG. 14. Alternatively, cross sections of the plurality of cavities 112 may be set to different shapes. For example, cross sections of some cavities 112 are circles, and cross sections of the other cavities 112 are regular polygons or the like. Cross-sectional areas of the plurality of cavities 112 may be set to be the same, or may be set to be different, that is, cross-sectional areas of some cavities 112 are relatively large, and cross-sectional areas of the other cavities 112 are relatively small. Lengths of the plurality of cavities 112 may be set to be the same, or may be set to be different. Therefore, a specific structure of the cavity 112 is not specifically limited in this application.

For example, a cavity 112 disposed in a region that is on the hinge cover body 110 and that needs to bear a relatively small force may be disposed to be of a structure with a relatively large cross-sectional area and a relatively long length. A cavity 112 disposed in a region that needs to bear a relatively large force (for example, at the connection point between the hinge cover 100 and the structural member 200) may be disposed to be of a structure with a relatively small cross-sectional area and a relatively short length. This helps reduce the weight of the hinge cover 100, and can ensure overall strength of the hinge cover 100.

To further ensure the strength of the hinge cover 100, a vertical projection of the cavity 112 provided in this embodiment of this application on the inner surface of the hinge cover body 110 is disposed offset from a vertical projection of the threaded column 121 on the inner surface of the hinge cover body 110. That is, the projection of the cavity 112 on the inner surface does not coincide with the vertical projection of the threaded column 121 on the inner surface. In this way, no cavity 112 is disposed in a region that is on the hinge cover body 110 and in which the threaded column 121 is disposed. Therefore, overall strength in the region corresponding to the threaded column 121 is not reduced, to further help improve the overall strength of the hinge cover 100.

It should be noted that the inner surface of the hinge cover body 110 is not necessarily a plane. Therefore, a plane on which the threaded column 121 is located is a projection plane, that is, on an XY plane, the cavity 112 is disposed offset from the threaded column 121.

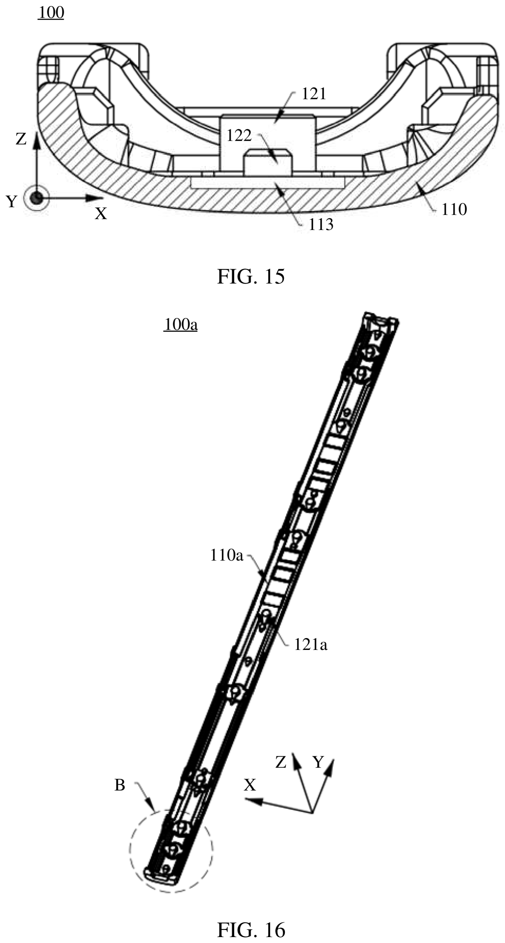

In some other possible embodiments, refer to FIG. 15. FIG. 15 is a diagram of a cross-sectional structure of still another hinge cover 100 according to an embodiment of this application. At least one groove body 113 may be further disposed on the inner surface of the hinge cover body 110, to reduce the weight of the hinge cover 100. That is, a plurality of groove bodies 113 are disposed in different regions on the inner surface of the hinge cover body 110, to reduce the weight of the hinge cover 100. In this way, the weight of the hinge cover 100 can be reduced. In addition, this helps reduce process difficulty during processing, so that processing costs can be lowered.

In addition, the plurality of groove bodies 113 may be disposed in regions in which the threaded column 121 is not disposed, and the threaded column 121 is disposed outside the groove body 113, that is, a region occupied by the groove body 113 is disposed offset from the vertical projection of the threaded column 121 on the inner surface. Therefore, the overall weight of the hinge cover 100 can be further reduced without affecting the threaded column 121.

In addition, shapes of cross sections that are of all the groove bodies 113 and that are parallel to the inner surface of the hinge cover body 110 (cross sections parallel to the XY plane) may be the same, for example, may all be set to circular structures, or may be different. For example, some cross sections are circles, and some cross sections are polygons. In addition, each groove body 113 may be in a regular shape (for example, a circle or a regular polygon), or may be in an irregular shape (for example, a polygon with a head-to-tail connection and unequal side lengths). Therefore, a specific structure of the groove body 113 is not specifically limited in this application.

Based on this, the plurality of cavities 112 are disposed inside the hinge cover body 110 or the groove body 113 is disposed on the inner surface of the hinge cover body 110, to help reduce the overall weight of the hinge cover 100, thereby facilitating lightening and thinning of the device. In addition, on a plane parallel to the inner surface of the hinge cover body 110, both the cavity 112 and the groove body 113 are disposed offset from 120. This can reduce the weight of the hinge cover 100, and ensure strength at 120, to lower a risk that an imprint occurs on the outer surface of the hinge cover 100.

In some embodiments, the threaded column 121, the positioning column 122, and the connection groove 123 form a connection structure. The connection structure includes but is not limited to the foregoing several structures. The connection structure may alternatively be a structure in another form, and is configured to be connected to the structural member 200 or another component. Therefore, this is not specifically limited in this application.

A structure of the hinge cover 100 provided in this embodiment of this application is described above. The following describes a method for manufacturing the hinge cover 100.

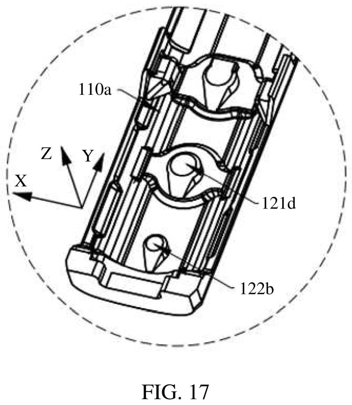

First, a hinge cover blank 100a is manufactured. Refer to FIG. 16. FIG. 16 is a diagram of a structure of a hinge cover blank 100a according to an embodiment of this application, and FIG. 17 is an enlarged view of a structure of a region B of the hinge cover blank 100a provided in FIG. 16.

For example, the hinge cover blank 100a may be manufactured by using a 3D printing process. 3D printing is a rapid prototyping technology, is also referred to as additive manufacturing, and is a technology in which an object is constructed through layer by layer printing, based on a digital model, and by using bondable materials such as powdered metal or plastic. That is, different printing materials including metal, ceramic, plastic, and the like are stacked layer by layer by using a 3D printer, to finally convert a model on a computer into a physical object.

In this embodiment of this application, the titanium alloy powder may be added to the 3D printer, and the titanium alloy is stacked layer by layer through 3D printing, to form the hinge cover blank 100a. The titanium alloy has relatively high metal hardness. Therefore, when processing is performed by using a conventional numerical control machine tool cutting process, a problem such as long processing duration, low efficiency, and high material (for example, a cutter head) consumption is caused, resulting in an increase in processing costs. Use of the 3D printing technology can improve processing efficiency, and help lower costs.

In some embodiments, still refer to FIG. 16 and FIG. 17. The hinge cover blank 100a may include a hinge cover body blank 110a and a threaded column blank 121d. An integrally formed structure is formed by the hinge cover body blank 110a and the threaded column blank 121d by using the 3D printing process, to help improve overall structural strength.

In addition, the hinge cover body blank 110a may further include a positioning column blank 122b. It may be understood that a blank 120a formed by using the 3D printing process is a basic structure and does not meet an accurate design requirement. For example, the threaded column blank 121d and the positioning column blank 122b are merely protruding structures formed on the hinge cover body blank 110a, and are not processed with high precision. However, the protruding structure is formed by using the 3D printing process. Compared with a conventional cutting process, this helps reduce production difficulty, and helps lower production costs.

In addition, when the limiting groove 124 shown in FIG. 13 is processed, the limiting groove 124 is disposed on an inner wall of the connection groove 123, and a dimension of the connection groove 123 is relatively small. Therefore, when processing is performed by using a numerical control machine tool, a cutter head usually cannot be extended into the connection groove 123. If a cutter head with a relatively small volume is used, strength of the cutter head cannot be ensured, resulting in an increase in processing difficulty.

Based on this, the 3D printing process is used. In the process, layer by layer stacking is performed. Therefore, in a process of manufacturing the hinge cover blank 100a, the limiting groove 124 can be formed without processing difficulty.

In addition, in the 3D printing process, the cavity 112 shown in FIG. 14, the boss 111 shown in FIG. 11, and the groove body 113 shown in FIG. 15 may be formed on the hinge cover body blank 110a. In this way, in a process of manufacturing the hinge cover blank 100a by using the 3D printing process, structures such as the cavity 112, the boss 111, and the groove body 113 may be formed, to help further improve production efficiency.

Then, the foregoing blank is finished to form the hinge cover 100.

For example, the hinge cover blank 100a may be finished by using a numerical control machine tool cutting process. A basic structure (namely, the hinge cover blank 100a) of the hinge cover 100 has been formed by using the 3D printing technology. Therefore, duration of performing finishing by using the numerical control machine tool is greatly shortened, thereby saving costs.

The finishing may include cutting, polishing, tapping, and the like on the hinge cover blank 100a.

For example, a tapping process is performed on the threaded column blank 121d to process a thread (an internal thread, an external thread, or the like), to form a threaded column 121.

In addition, the hinge cover body blank 110a is further cut to form a hinge cover body 110 that meets a design dimension requirement (for example, a thickness dimension of the hinge cover body 110). In addition, the positioning column blank 122b may be further cut to form a positioning column 122 that meets a dimension requirement (for example, a diameter and a height dimension of the positioning column 122).

To further improve aesthetics of the hinge cover body 110, a surface of the hinge cover body 110 may be polished by using the numerical control machine tool, so that overall aesthetics of the hinge cover 100 can be improved to form the hinge cover 100 shown in FIG. 6 and FIG. 7.

Finally, the hinge cover 100 may be further mounted, that is, the hinge cover 100 is mounted and fit with the structural member 200 in the foregoing hinge assembly. The hinge cover 100 is made of a titanium alloy material with relatively high hardness. Therefore, when the hinge cover 100 and the structural member 200 are fastened to and fit with each other, a risk that the structural member 200 causes the hinge cover 100 to be deformed can be lowered. This helps lower a risk that an imprint occurs on an outer surface of the hinge cover 100, to help improve overall aesthetics.

In the descriptions of this specification, specific features, structures, materials, or characteristics may be properly combined in any one or more embodiments or examples.

The foregoing descriptions are merely specific implementations of this application, but the protection scope of this application is not limited thereto. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. A hinge cover, comprising:
a hinge cover body, having an inner surface; and
a threaded column, disposed on the inner surface of the hinge cover body, wherein the threaded column is configured to be connected to a structural member of a foldable-screen terminal, wherein
material yield strength of the hinge cover is greater than 300 MPa.

2. The hinge cover according to claim 1, wherein a thickness of the hinge cover body is less than 0.8 mm.

3. The hinge cover according to claim 1 or 2, wherein the hinge cover is made of a titanium alloy material or a high-strength steel material.

4. The hinge cover according to any one of claims 1~3, wherein the threaded column is integrally formed with the hinge cover body.

5. The hinge cover according to any one of claims 1~4, wherein the threaded column comprises a first column body, and an external thread is disposed on an outer sidewall of the first column body.

6. The hinge cover according to any one of claims 1~4, wherein the threaded column comprises a second column body, a threaded hole is disposed on an end face that is of the second column body and that is away from the inner surface, and an internal thread is disposed in the threaded hole.

7. The hinge cover according to any one of claims 1~6, wherein two connection grooves are disposed on the hinge cover body, and the two connection grooves are respectively disposed at two ends of the hinge cover body in a length direction.

8. The hinge cover according to claim 7, wherein a limiting groove is disposed on a sidewall of the connection groove.

9. The hinge cover according to claim 8, wherein the limiting groove is disposed on a sidewall that is of the connection groove and that is distributed in the length direction of the hinge cover body, and both the connection groove and the limiting groove extend in a width direction of the hinge cover body.

10. The hinge cover according to any one of claims 1~9, wherein the hinge cover further comprises at least one positioning column, and the positioning column is disposed on the inner surface of the hinge cover body.

11. The hinge cover according to claim 10, wherein a cross section of the positioning column is a circle, an ellipse, or a regular polygon.

12. The hinge cover according to any one of claims 1~11, wherein a boss is formed on the inner surface, and the threaded column is disposed on the boss.

13. The hinge cover according to any one of claims 1~12, wherein a plurality of cavities are disposed inside the hinge cover body, and the plurality of cavities are distributed at intervals.

14. The hinge cover according to claim 13, wherein vertical projections of the plurality of cavities on the inner surface are disposed offset from a vertical projection of the threaded column on the inner surface.

15. The hinge cover according to any one of claims 1~14, wherein at least one groove body is disposed on the inner surface.

16. The hinge cover according to claim 15, wherein a region occupied by the groove body on the inner surface is disposed offset from the vertical projection of the threaded column on the inner surface.

17. A foldable-screen terminal, comprising a foldable screen, a first housing, a second housing, and a rotation mechanism, wherein the rotation mechanism comprises a hinge assembly and a hinge cover; the foldable screen is supported on the first housing, the second housing, and the hinge assembly; the first housing and the second housing are respectively fastened to two sides of the hinge assembly; and the hinge cover is the hinge cover according to any one of claims 1~16, and the hinge assembly is disposed on an inner surface of a hinge cover body of the hinge cover.

18. A method for manufacturing a hinge cover, comprising:
manufacturing a hinge cover blank, wherein the hinge cover blank comprises a hinge cover body blank and a threaded column blank, and material yield strength of the hinge cover blank is greater than 300 MPa; and
finishing the hinge cover blank to form a hinge cover.

19. The manufacturing method according to claim 18, wherein the finishing the hinge cover blank comprises: tapping the threaded column blank.

20. The manufacturing method according to claim 19, wherein the finishing the hinge cover blank further comprises: cutting and polishing the hinge cover blank.

21. The manufacturing method according to any one of claims 18~20, wherein at least one of a cavity, a boss, and a groove body is disposed on the hinge cover body blank.

22. The manufacturing method according to any one of claims 18-21, wherein a method for manufacturing the hinge cover blank comprises a 3D printing process.

23. The manufacturing method according to any one of claims 18~22, wherein a method for finishing the hinge cover blank comprises a numerical control machine tool cutting process.
